# EUROPEAN PATENT APPLICATION

(11) **EP 4 726 618 A1**
(43) Date of publication of application: **15.04.2026**
(21) Application number: 24205738.8
(22) Date of filing: 10.10.2024
(51) Int. Cl.: G06Q 10/06, G06Q 10/20, G06Q 10/30, G07C 3/00

(54) **ASSESSMENT OF A HOUSEHOLD APPLIANCE**

(71) Applicant: BSH Hausgeräte GmbH, 81739 München (DE)
(72) Inventor: Pak, Nina, 81829 München (DE); Krautenbacher, Otto, 83349 Palling (DE); Nakou-Franke, Gioninta, 83024 Rosenheim (DE); Hörmann, Vitus, 89353 Glött (DE); Graf, Gerhard, 89407 Dillingen (DE); Huber, Michael, 83349 Palling (DE); Nuez Vicente, Julio, 50003 Zaragoza (ES); Urban, Karol, 02-222 Warsawa (PL); Szymanowski, Hubert, 02-222 Warsawa (PL); Szafran, Paulina, 02-222 Warszawa (PL); Dolezalek, Pascal, 71686 Remseck am Neckar (DE); Noga, Magdalena, 04-306 Warsaw (PL); Nowicki, Maciej, 04-030 Warszawa (PL)

(57) **Abstract**

A method (200) for grading a household appliance (105) comprises steps of determining (205) lifecycle parameters for a plurality of household appliances (105); sorting the appliances (105) into a directed graph (400) with the lifecycle parameters as a sorting criterion such that along a path through the graph (400), a Pareto improvement lies between successive appliances (105); determining (215) a lifecycle rank for each appliance (105) according to a position of the appliance (105) in a path in said graph (400); and determining (225) a grade for the appliance (105) on the basis of its lifecycle rank.

## Description

The present invention concerns an assessment of a household appliance. More specifically, the invention concerns a quality assessment of a used household appliance.

In a household, a variety of appliances may be found. A new household appliance may be of high quality so that the appliance may be used for many years. However, due to new improvements or changed circumstances in the household, it may be desirable to replace one household appliance with another one. As the old appliance may still be functioning, it may be traded in or sold separately.

A potential buyer of a used household appliance has no easy way of determining its quality. Especially when the buyer has no way of handling the appliance before buying it, as is usual on internet trading platforms, an impression from a picture or a seller's description may be deceiving.

An object of the present invention lies in providing an improved technique for grading a used household appliance. The invention solves said object through the subject matter of the enclosed independent claims. The dependent claims describe preferred embodiments.

According to a first aspect of the present invention, a method for grading a household appliance comprises steps of determining lifecycle parameters for a plurality of household appliances; sorting the appliances into a directed graph with the lifecycle parameters as a sorting criterion, such that along a path through the graph a Pareto improvement lies between successive appliances; determining a lifecycle rank for each appliance according to a position of the appliance in a path in said graph; and determining a grade for the appliance on the basis of its lifecycle rank.

By using usage or quality information on a number of household appliances, an individual appliance may be graded. If the appliance is connected to a network, usage data may already be available. The proposed approach may form a universal and practical way of providing a reasonable grade that indicates the usability or quality of a used appliance.

It is especially proposed to apply the concept of "Pareto improvement" for putting appliances into an order that reflects their qualities or usabilities. It is preferred that the parameters are indicative of how much functionality may still be drawn out of a used household appliance. It is especially proposed to assign a grade to said household appliance that can be normalized on a predetermined scale, for instance 0-100, wherein 0 represents a barely functioning appliance and 100 represents an appliance in mint condition. The score may be used to compare two used household appliances. On the basis of the score, it may be determined when a household appliance needs replacement. Furthermore, an operative value may be determined that indicates when a household appliance should be discarded. The appliance may be traded in or sold for a price that depends on the associated grade.

It is especially preferred that grading is carried out on a large number of household appliances, e.g. 1.000 or more. The appliances may be comparable in their technical specifications and especially be designed to serve the same purpose. That is, coffee makers may be only compared to coffee makers etc., preferably of the same type. The method may make use of data that has already been collected from networked household appliances. Such appliances have become more and more common so that considerable historic data may already be available.

The mentioned Pareto improvement goes back to a principle that is used in welfare economics and formalizes the idea of being "better in every possible way". A first appliance may be considered better by a Pareto improvement over a second appliance if each parameter of the first appliance is at least as good as the corresponding parameter of the second appliance and at least one parameter of the first appliance is better than the corresponding parameter of the second appliance.

In other words, the first appliance is better than the second appliance in at least one parameter and no worse than the second appliance in all other parameters. This criterion allows application to an arbitrary large number of parameters. In this way, complex comparisons between different household appliances may be made possible. It also allows quickly and efficiently sorting a large number of household appliances according to their quality or usability.

It is preferred that the parameters of an appliance are chosen or mapped such that a low numeral value is considered favourable. For this, a determined parameter may be converted appropriately. This may include taking an absolute, a negative or a reciprocal of a determined value. It is furthermore preferred that all parameters are positive. A parameter may be normalized to a predetermined scale. Different parameters may use different scales. Example scales may range from zero to one, one to ten or one to hundred. It is to be noted that an alternative approach, in which all parameters are negative and/or a parameter with a high numeral value is considered favourable, is also possible.

In some preferred embodiments, for each household appliance another rank according to the inverse Pareto criterion is determined; and the appliance is graded on the basis of a combination of both ranks. The combination may especially comprise an arithmetic average.

The inverse Pareto criterion may be determined by taking the inverse of each parameter and sorting the appliances such that a Pareto deterioration lies between successive appliances. If a first appliance is considered better by a Pareto improvement over a second appliance, the second appliance may be considered worse by a Pareto deterioration. A first appliance that is considered worse by a Pareto deterioration over a second appliance is less good than the second appliance in at least one parameter and at most as good as the second appliance in all other parameters.

In this way, a second reversed rank may be assigned to each household appliance. The second rank may help to mitigate the effect that one parameter, which differs significantly from an average value, has a large effect on the position into which the household appliance is ordered in the graph. The second ranking may help treating outliers, measurement errors and similar errors.

The proposed method may be adapted to different types of household appliances. It has been found that the most significant parameters for grading a household appliance comprise its age and the workload it has accomplished. It is therefore preferred that the lifecycle parameters comprise at least an age of the household appliance and a number of processes carried out by the household appliance.

The presented approach is well suited to add more parameters. This may make the grade more representative of device quality, but beyond the age and the number of processes the improvement due to another parameter is expected to be smaller.

Different types of household appliances may use different processes. For instance, for a coffee maker one process may be the preparation of one hot drink. For a washing machine, one process may comprise one washing programme. Similarly, a dishwasher may count its processes by programmes that were executed for washing dishes.

It is preferred that the household appliance comprises a kitchen machine, a laundry care machine or an electric power tool. Each of these kinds of household appliance may have one or more parameters that may be used for assessing the appliance. In the following, preferred (but optional) parameters for assessing a household appliance are given:
All types of household appliances:
   - Age of the appliance and
   - Number of times it has been used, e.g. an appliance-specific process was carried out.
Coffee Machines:
   - Age of the appliance,
   - Number of beverages produced,
   - Number of days on which at least one beverage was produced,
   - Number of days the appliance was not connected to the internet,
   - Maximum number of days the appliance was not connected,
   - Number of times and average duration of loss of the Wi-Fi signal,
   - Number of rinses of the water filter,
   - Average number of usages between rinses of the water filter,
   - Number of times the milk system was rinsed,
   - Average number of usages between rinses of the milk system,
   - Number of cleaning programs executed (including cleaning during combined cleaning and descaling runs),
   - Average number of usages between cleaning programs,
   - Number of descaling runs (including descaling during combined cleaning and descaling runs),
   - Average number of usages between runs of the descaling program,
   - Number of reminders that descaling is overdue,
   - Number of times the device was blocked from producing beverages since descaling is overdue and
   - Number of error messages and number of errors by type.
Dishwashers:
   - Age of the appliance,
   - Number of times a dishwashing program was executed,
   - The average number of days that users needed to refill salt after a salt-lack warning was given,
   - Average value of the water turbidity sensor,
   - Number of times a cleaning program was executed,
   - Number of times the filter was blocked and
   - Number of errors.
Washing Machines and Laundry Dryers:
   - Age of the appliance,
   - Number of times it has been used,
   - Amplitude of the vibration during different types of spinning,
   - Power consumption of the motor and
   - Number of errors.
Power Drills and similar rotary tools (e.g. electric screw drivers, impact drills, hammer drills, angle grinders, ...):
   - Total duration of usage,
   - Number of times the trigger was used,
   - Load on the device during usage (e. g. based on input power histogram),
   - Number of times the device overheated,
   - Number of times the kickback control was activated and
   - number of times the device has switched off because it detected that it was dropped.
Batteries (e.g. for power tools, vacuum cleaners, small kitchen appliances):
   - Number of times it has been charged and
   - Remaining lifetime of the battery.

According to some preferred embodiments, a similar determination for usage parameters of a household appliance may be carried out. A usage parameter may be indicative of how well the appliance was treated or what problems were encountered in its lifetime so far.

More specifically, the method may comprise steps of determining usage parameters for a plurality of household appliances, preferably the same plurality of household appliances as for determining lifecycle parameters, sorting the appliances into a directed graph with the usage parameters as a sorting criterion, such that along a path through the graph a Pareto improvement lies between successive appliances; and determining a usage rank for each appliance according to a position of the appliance in a path in said graph. The grade of the appliance may be determined on the basis of the assigned lifecycle rank and the additional basis of its determined usage rank.

In a simple embodiment, an average between the usage rank and the lifecycle rank may be determined. However, it is preferred that the lifecycle rank has more weight for determining the grade. A weighted average in which the lifecycle parameters contribute for about 80 % and the usage parameters for about 20 % of the grade has led to good results.

For determining a rank from the directed graph, it is proposed that a predetermined number is selected first. This number may indicate the lowest possible rank that will be generated. In one embodiment, this number may be one. Next, an iterative procedure may be started. In this, every appliance that constitutes a starting point of a path may be ranked with the selected number. Ranked appliances may be removed from the graph and the number may be increased. Usually, the number will be incremented by one. The procedure may be repeated until all appliances are ranked.

It is to be noted that with the given approach several appliances may have the same rank. For appliances with the same rank, associated parameters will not necessarily be identical.

It is preferred that the grade is determined on the basis of the rank such that the grade is normalized to a predetermined scale of, e.g., 0 - 100. This corresponds to a percentage scale, which is intuitively understandable to a user. Accordingly, 100 may be assigned to a household appliance in very good condition and zero to one in the worst conceivable condition.

It may be required that the appliance is still functioning for being graded in the described way. An unresolved error that prevents its operation may exclude the appliance from grading.

The above-mentioned procedure may sort the household appliances into an order that reflects its usability or quality. However, the ordering may not be linear, so that the distance in grades between a first and a second appliance may be only weakly indicative of how much one is better than the other.

To introduce an improved way of grading the appliances, the ranked appliances may be further processed. This may comprise selecting appliances with the lowest rank and setting their grade to a predetermined number; and iteratively selecting appliances with the next higher rank; determining a distance between a selected appliance to an appliance of the next lower rank; and setting the rank of the selected appliance to the determined distance plus the rank of the appliance of the next lower rank.

A grade for the appliance may be determined after its rank. In one embodiment, the grade may be a rank, in another embodiment the grade may be an inverse of the rank. An optional technique for determining a grade, that is more linear with the grade on a predetermined scale, is described below.

The predetermined number may indicate the worst (i.e. lowest) possible grade. According to the above-given example, the predetermined number may be zero.

This implies that the value of the distance is always positive. Therefore, for a given measure of distance, the further a parameter set of the household appliance is apart from the worst possible appliance, the higher the grade will be that it receives. This may allow for a better distribution of appliances on a scale. Two or more household appliances may be compared with regard to their quality more easily.

The distance between parameter sets of two household appliances may be determined in various ways. According to some embodiments, a Mahalanobis distance may be employed. According to some further embodiments, the distance may be determined among the first principal component of a selected appliance to the previous appliance. In this case, it is preferred that a principal component analysis of the appliance data is carried out. This is preferred to be done before distances between appliances or their associated parameter sets are determined.

Regardless of whether or not a linearization technique is used, it is preferred that the resulting grades are mapped to a predetermined scale, e.g. 0-100.

The determined grade of a used household appliance may be provided to a user of said appliance. As the determined grade may be considered the result of an assessment and as it may influence a legal or monetary value attributed to the appliance, it is proposed to protect the grade against tampering or forgery. The method may comprise a step of digitally signing an electronic document that comprises the determined grade. The electronic document may be used as a certificate that reflects the usability or quality of a used household appliance.

It is preferred that the electronic document also comprises an identification of the appliance. This may comprise a serial number of the appliance. Also, make or model indications and/or a picture of the appliance may be included. It is furthermore proposed that the electronic document comprises a timestamp that indicates when the appliance was graded.

The electronic document may be provided to a person that is associated to the appliance. Especially for a networked appliance, a person that is responsible for the appliance (or that owns the appliance) may be such a person. Optionally, a request for issuing said document to a different person may be accepted.

According to some embodiments of the present invention, a person associated to a household appliance may be allowed online access to the current grade of his or her appliance. This may help the user to estimate the value of the appliance and whether or not it is time to replace the appliance.

It is preferred that parameters for household appliances are collected intermittently or continuously over the usage time of the appliances. As long as a household appliance is online, i.e. it is connected to a central repository for collecting its parameters, collected data about a usage cycle may be uploaded promptly. The volume of the uploaded data is generally not an issue, so that extensive information may be collected by a corresponding service.

Should the household appliance not be networked or should the network access be interrupted, collected information may be stored locally. As soon as communication to the remote service is possible again, an information upload may be triggered. In some cases, collected information may be read out from the storage of an appliance during servicing. On-board memory of the appliance may be limited, so that less comprehensive data may be stored.

According to a further aspect of the present invention, a device for grading a household appliance is proposed. The device comprises an interface for retrieving lifecycle parameters for a plurality of household appliances; and processing means. In this context, the processing means are adapted
- to sort the appliances into a directed graph with the lifecycle parameters as a sorting criterion, such that along a path through the graph a Pareto improvement lies between successive appliances;
- to determine a lifecycle rank for each appliance according to a position of the appliance in a path in said graph; and
- to determine a grade for the appliance on the basis of its lifecycle rank.

The processing means may be adapted to carry out, completely or in part, a method disclosed herein. The processing means may be of electronic nature and may comprise a micro-computer or micro-controller, an ASIC or a similar device. The method may be realised as a computer program product with program code means and may be stored on a computer readable medium. Features or advantages of the method may be applicable to a corresponding device or system as well as vice versa.

The device is preferred to run as a service on a server or a cloud infrastructure. The device may be connected to or identical with a device that has hitherto been used for collecting usage data from household appliances.

According to a further aspect of the present invention, a system is proposed which comprises a device as disclosed herein as well as a plurality of household appliances. The appliances are preferred to be technically comparable. That is, the appliances should serve a similar or the same purpose. Moreover, models of the appliances should be similar or identical.

Non-restricting embodiments of the invention will now be discussed in more detail with reference to the enclosed drawings in which:
- Figure 1: shows a system;
- Figure 2: shows a flow diagram of a method;
- Figure 3: shows a data flow diagram; and
- Figure 4: shows an example for grading household appliances.

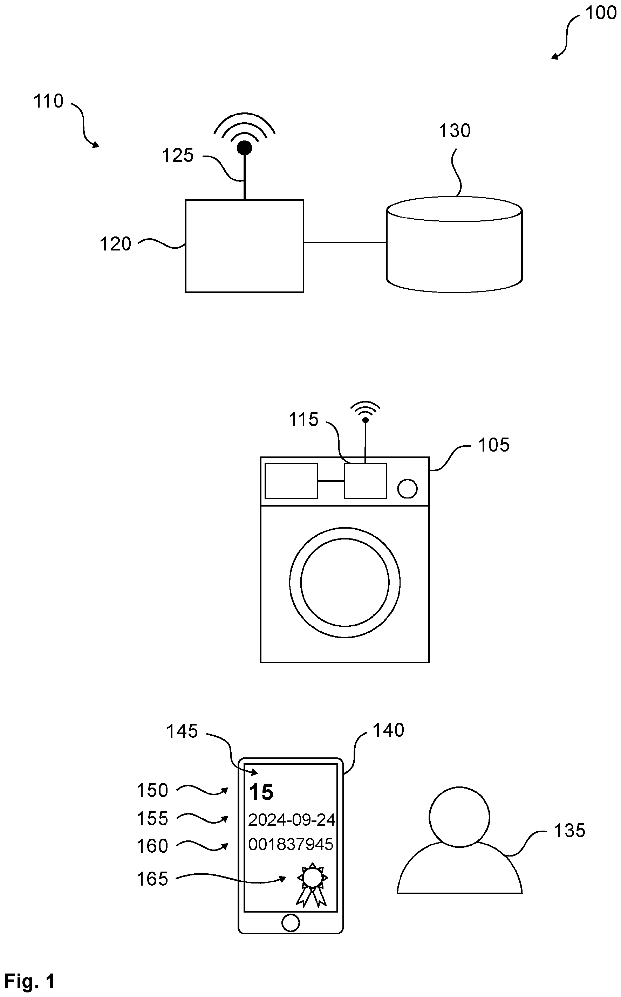

Figure 1 shows an embodiment of a system 100 comprising at least one household appliance 105 and one external device 110. It is to be understood that the presently proposed invention is preferred to be carried out on a large number of appliances 105. The household appliance 105 shown in Figure 1 is by way of example a washing machine, but other household appliances 105 are equally possible. The household appliance 105 comprises a controller 115, that is adapted to determine parameters of the appliance 105 and its operation and forward said parameters to the device 110.

The device 110 comprises processing means 120, a communication interface 125 and a storage 130. Information may be retrieved via the communication interface 125 from the plurality of household appliances 105 and stored in the storage 130 for later processing.

It is proposed that, based on the retrieved information, a household appliance 105 is assessed. A user 135, who may be associated to the appliance 105, may request grading of the appliance 105 at the device 110. This may, for instance, be done by using a mobile device 140, especially a smart phone. Other user interfaces are also possible.

The device 110 may determine a grade for said appliance 105 and provide an electronic document 145, which the user 135 may present, print out or use otherwise. In the exemplary embodiment shown in Figure 1, the electronic document 145 comprises a determined grade 150, a timestamp 155 referring to when the assessment was done, an identification 160 of the concerned appliance 105 and a cryptographic signature 165 that proves authenticity of the document 145 and makes sure that forging or tampering with the document 145 is prevented.

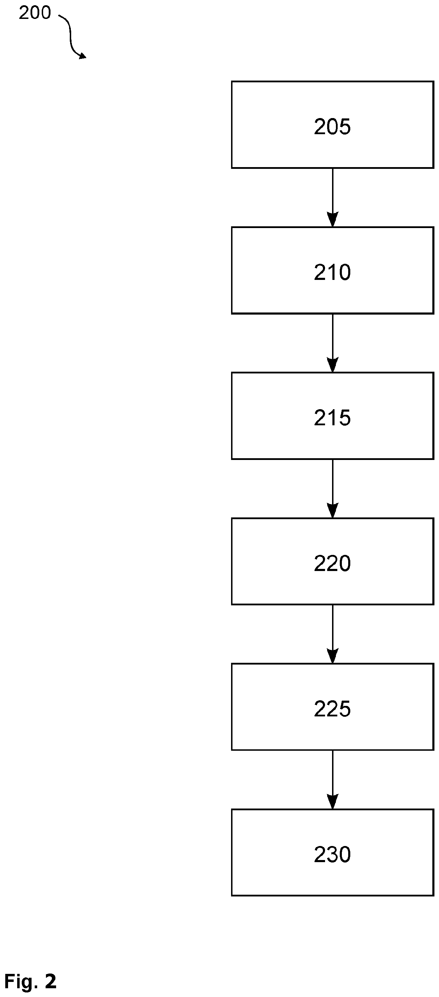

Turning to Figure 2, there is provided a flow diagram of an embodiment of a method 200 for grading a household appliance 105. The method 200 may largely be carried out on a device 110.

In a step 205, parameters for a number of household appliances 105 may be determined. In practice, a fleet of household appliances 105 may provide usage and/or lifecycle information during their lifetime. In an embodiment, such information may be uploaded to the device 110 as soon as a process run is started or completed or a predetermined event takes place. Such an event may, for instance, comprise the occurrence of an error or an interruption of a running process. An appliance 105 that has no connectivity to said device 110 may store retrieved information locally, from where the information may later be forwarded to the device 110. The device 110 may store retrieved information in the storage 130.

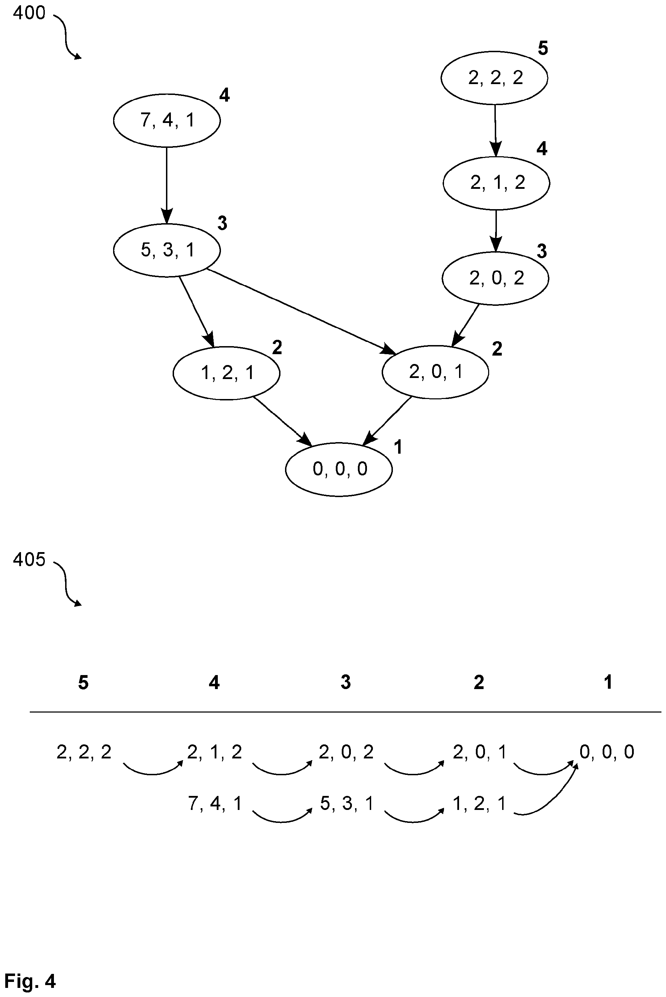

In a step 210, gathered information for the number of household appliances 105 is processed. As will be explained below in more detail with reference to Figure 4, each appliance 105 is associated with a set of parameters that can be considered a vector.

From the vector information, a directed graph may be created, which comprises a node for each household appliance 105. Associated with the node is the vector of parameter information. The appliances 105 are sorted inside the directed graph, such that there lies a Pareto improvement between a pair of successive household appliances 105.

In a step 215, the household appliances 105 inside the directed graph may be assigned a rank. Roughly speaking, appliances 105 may be brought into an order that ranges from a "best" appliance 105 to a "worst" appliance. Such an order is represented as a path in Figure 4 and the graph may comprise more than one path.

Ranking may comprise the following steps: A vector may be considered "not dominated" if there is no vector, which is greater. Such a vector may be the starting point of a path through said directed graph. It is assumed that all coordinates of given vectors have a negative correlation with a quantity to be described. This quantity may be the quality in the given context. A positively correlated coordinate should be multiplied by -1. In other words, all parameters that are comprised by a vector may be considered "good" if their numeral value is small, and "bad" if it is large.

Starting from the top of the graph, i.e. from a starting point, a predetermined lowest rank may be assigned to each not dominated vector. Said lowest rank may, for instance, be 1. Following that, all ranked vectors may be removed from the graph, the rank may be increased and the process may be repeated until all vectors or household appliances 105, respectively, are ranked.

A vector having one element that is significantly larger than the average may obtain a very low rank. To mitigate this effect, a second reversed rank may be determined for each appliance 105. For this, all vectors in the directed graph may be multiplied by -1. Following that, the above-described iterative assigning of ranks may be repeated, but this time starting from end points of paths through the directed graph. The final rank of a household appliance 105 may be a linear combination of the two determined ranks. In an embodiment, the final rank may be the arithmetic means between the two ranks.

In a step 220, the determined ranks may be linearized, so that the distance in ranks between two appliances 105 corresponds better to a difference in quality or usability. The household appliances 105 may be looped over in an order according to their ranks. The first household appliance by rank may be associated with a grade of zero (or another predetermined number).

For every following household appliance 105, a score may be determined that comprises a sum of two elements. The first element is the rank of a household appliance 105 that is one grade below the considered household appliance 105. The second element is a distance between the appliance 105 in question and the appliance 105 one rank below. The sum of both two elements is then assigned as a grade to the household appliance 105.

For determining the distance, a Mahalanobis distance measure may be used. Other measures of distance are also possible, for instance Euclidian. However, it is preferred that the distance is determined along the first principal component of this appliance 105 to the previous appliance 105. To speed up calculation, a principal component analysis (PCA) may be carried out on the appliances 105 in the directed graph before linearization.

In a step 225, grades assigned to the appliances 105 may be normalized to a predetermined scale. In case the linearization step 220 was not carried out, a grade may be determined on the basis of a rank. In one embodiment, the grade may be the determined rank. Normalization may be carried out afterwards.

In a step 230, an electronic document 145 may be provided which comprises the determined grade 150. More information may be comprised (cf. Figure 1).

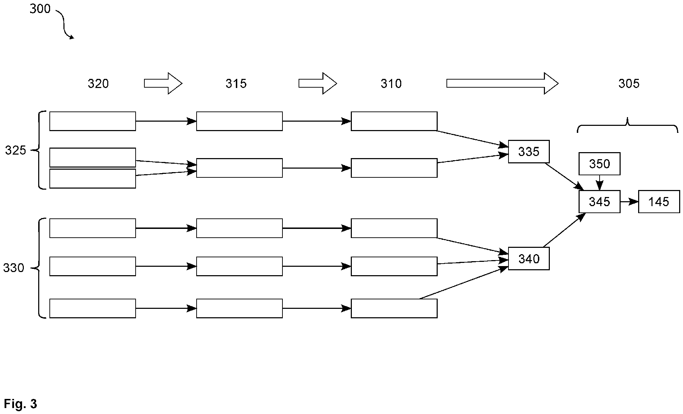

Figure 3 shows an exemplary data flow diagram 300. Abstractly, a summary score 305 is determined on the basis of a relative score 310, which stems from an absolute score 315, which, in turn, bases on aggregated data 320. In an upper section, lifecycle information is displayed, and in a lower section, usage information 330.

The lifecycle information 325 may indicate, how much and/or how long the appliance 105 was used. The usage information 330 may indicate how well the household appliance 105 was treated.

Exemplary lifecycle information, that may be comprised by aggregated data 320, may comprise a number of processes carried out, a production date when the last process ran or the current date, respectively. The number of usages may be transposed into a number of cycles as an absolute score 315. The production dates and the date of the last process may be combined to yield an absolute score 315 that reflects the age of the appliance 105 between its manufacturing and the present date.

As a relative score 310, the number of cycles may be copied from the absolute score 315. The age of manufacturing to the present date of the absolute score 315 may be transformed into an age in months as relative score 310. Elements of the relative score 310 may be combined into a first summary score 335.

A similar approach may be carried out with regard to the usage information 330. Exemplary parameters that may be collected as aggregated data 320 may comprise events when a fault condition has been detected, for instance, the lack of salt in a dishwasher 105, an operational parameter like the turbidity of washing water inside a dishwasher or further values. The aggregated data 320 may be transformed into corresponding absolute scores 315. In the above-given example, a mean reaction time between the detection of a lack of salt and its remedy may thus be determined. From turbidity readings, a mean turbidity may be determined.

From these intermediate results, relative scores 310 may be determined. The reaction time for refilling salt may be transformed into a number of days in which a lack of salt was present. The mean turbidity may be transformed into an average turbidity. Other parameters may be processed accordingly.

From the elements of the relative score 310 of usage information 330, a second summary score 340 may be determined. Steps 335 and 340 may each correspond to step 215 of the method 200.

The summary scores 335, 340 may be combined to a third summary score 345 on the basis of a predetermined weighting 350. It is preferred that the lifecycle score contributes to about 80 % and the usage score to about 20 % of the third summary score 345. The determined score 345 may be presented on the electronic document 145. It is preferred that the document 145 also comprises other information as indicated. Optionally, elements of the relative score 310 may be included.

Figure 4 shows an example for grading household appliances 105. In an upper section, a directed graph 400 and in a lower section a table 405 is shown. The directed graph 400 is the result of ordering a predetermined exemplary set of appliances 105 into relationships of Pareto improvements. The directed graph is acyclic, meaning that is it has no loops.

Each household appliance 105 is represented by a vector with three dimensions that refer to three parameters. Preferably, the parameters are independent of each other. Each parameter has a negative correlation with a quantity that is indicative of quality. In other words, for all parameters, the lower the value, the higher the quality of the corresponding appliance 105. Example parameters may stand for age, number of completed program cycles and number of encountered errors.

In the directed graph 400, the vectors are connected such that an arrow between a vector and a successive vector represents a Pareto improvement. I other words, an arrow spans from an appliance that is considered to be "worse" to an appliance that is considered to be "better" in terms of a Pareto improvement.

The graph 400 may have the following properties:
- If a vector A has a better value in one parameter than a vector B and the values in all other parameters are the same, then vector A shall receive the same or a better grade than vector B.
- If the vectors A and B are close to each other by a given measure of distance, then their grades should also be close to each other. If the vector A is closer to the vector B than to the vector C, then the Pareto grade of the vector A is closer to the grade of the vector B than to the grade of the vector C.

Grades determined for a vector may be called a Pareto grade. Such a grade is useful for comparing appliances 105 because the difference between two Pareto-scores fulfils the following properties of a distance metric:
If d(x, y) is defined as the difference between two Pareto-grades x and y, d may fulfil the following criteria:
- non-negativity: d(x, y) >= 0
- identity: d(x, y) = 0 if and only if x == y
- symmetry: d(x, y) = d(y, x)
- triangle Inequality: d(x, y) + d(y, z) >= d(x, z)

Paths through the directed graph 400 start at a vector (7, 4, 1) and (2, 2, 2). These vectors are therefore "not dominated" in mathematical terms. Not dominated vectors may be assigned a predetermined rank, which is "1" in the present exemplary case. This is the lowest grade that will be assigned to a vector in a graph 400. After this step, all graded vectors may be removed from the directed graph 400.

The predetermined rank may then be increased, especially incremented, and the procedure may be repeated. Iteration stops when all vectors have been assigned a rank. In the directed graph 400, an example rank is indicated outside an ellipsis that surrounds the elements of the vector.

The table 405 in the lower section of figure 4 shows the vectors of the directed graph 400 sorted by their associated grades. Grades for the vectors and thus for the associated household appliances 105 may be determined straight after their associated ranks, that is, a rank may be taken as a grade. In some embodiments, a linearization and/or mapping of the grades may be carried out to determine grades.

A vector with the lowest grade may be assigned a predetermined rank, for instance 0. A vector with the next higher rank may be assigned a grade that is the sum of the previously determined vector of the lower grade plus the distance from the present vector to the vector of the lower grade. This procedure can be repeated until all vectors have been assigned an appropriate grade.

After that, the determined grades may be normalized to a predetermined scale, for instance between 0 and 100.

### Reference list (as part of the description)

- 100: system
- 105: household appliance
- 110: device
- 115: controller
- 120: processing means
- 125: communication interface
- 130: storage
- 135: user
- 140: mobile device
- 145: electronic document
- 150: grade
- 155: timestamp
- 160: identification
- 165: signature

- 200: method
- 205: determine parameters for appliances
- 210: prepare graph for appliances
- 215: determine ranks of appliances
- 220: linearize ranks
- 225: determine grade
- 230: provide certificate

- 300: data flow diagram
- 305: summary score
- 310: relative score
- 315: absolute score
- 320: aggregated data
- 325: lifecycle information
- 330: usage information
- 335: first summary score
- 340: second summary score
- 345: third summary score
- 350: weighting

- 400: graph
- 405: table

## Claims

1. Method (200) for grading a household appliance (105), the method comprising steps of:
- determining (205) lifecycle parameters for a plurality of household appliances (105);
- sorting (210) the appliances (105) into a directed graph (400) with the lifecycle parameters as a sorting criterion;
- such that along a path through the graph (400), a Pareto improvement lies between successive appliances (105);
- determining (215) a lifecycle rank for each appliance (105) according to a position of the appliance (105) in a path in said graph (400); and
- determining (225) a grade for the appliance (105) on the basis of its lifecycle rank.

2. Method (200) according to claim 1, wherein a first appliance (105) is considered better by a Pareto improvement over a second appliance (105) if each parameter of the first appliance (105) is at least as good as the corresponding parameter of the second appliance (105); and at least one parameter of the first appliance (105) is better than the corresponding parameter of the second appliance (105).

3. Method (200) according to claim 1 or 2, wherein the parameters of an appliance (105) are accommodated such that a low numeral value is considered favourable.

4. Method (200) according to one of the above claims, wherein for each household appliance (105) another rank according to the inverse Pareto criterion is determined; and the appliance (105) is graded on the basis of a combination of both ranks.

5. Method (200) according to one of the above claims, wherein the lifecycle parameters comprise at least an age of the household appliance (105) and a number of processes carried out with the household appliance (105).

6. Method (200) according to one of the above claims, wherein the household appliance (105) comprises a kitchen machine, a laundry care machine or an electric power tool.

7. Method (200) according to one of the above claims, further comprising steps of
- determining usage parameters for a plurality of household appliances (105);
- sorting the appliances (105) into a directed graph (400) with the usage parameters as a sorting criterion;
- such that along a path through the graph (400), a Pareto improvement lies between successive appliances (105); and
- determining a usage rank for each appliance (105) according to a position of the appliance (105) in a path in said graph (400);
- wherein the grade for the appliance (105) is determined on the additional basis of its usage rank.

8. Method (200) according to one of the above claims, wherein the rank of an appliance (105) is determined by selecting a predetermined number; and then iteratively
- ranking every appliance (105) that constitutes a starting point of a path with that number;
- removing ranked appliances (105) from the graph (400); and
- increasing the number;
until all appliances (105) are ranked.

9. Method (200) according to one of the above claims, wherein the grade of an appliance (105) is determined by:
- selecting appliances (105) with the lowest rank; and setting their grade to a predetermined number; and
- iteratively selecting appliances (105) with the next higher rank; determining a distance between a selected appliance (105) to an appliance (105) of the next lower rank; and setting the rank of the selected appliance (105) to the determined distance plus the rank of the appliance (105) of the next lower rank.

10. Method (200) according to claim 9, wherein the distance is determined along the first principal component of a selected appliance (105) to the previous appliance (105).

11. Method (200) according to claim 10, wherein a principal component analysis of the appliance (105) data is carried out.

12. Method (200) according to one of the above claims, further comprising digitally signing an electronic document (145) that comprises the determined grade.

13. Method (200) according to one of the above claims, wherein parameters for household appliances (105) are collected continuously over the usage time of the appliances (105).

14. Device (110) for grading a household appliance (105), the device comprising the following elements:
- an interface (125) for retrieving lifecycle parameters for a plurality of household appliances (105); and
- processing means (120) that are adapted to
- sort the appliances (105) into a directed graph (400) with the lifecycle parameters as a sorting criterion;
- such that along a path through the graph (400), a Pareto improvement lies between successive appliances (105);
- determine a lifecycle rank for each appliance (105) according to a position of the appliance (105) in a path in said graph (400); and
- determine a grade for the appliance (105) on the basis of its lifecycle rank.

15. System (100), comprising a device according to claim 14 and a plurality of household appliances (105).

## Amended claims

### Amended claims in accordance with Rule 137(2) EPC.

1. Method (200) for grading a household appliance (105), wherein the method is realised as a computer program product with program code means, the method comprising steps of:
- determining (205) lifecycle parameters for a plurality of household appliances (105);
- sorting (210) the appliances (105) into a directed graph (400) with the lifecycle parameters as a sorting criterion;
- such that along a path through the graph (400), a Pareto improvement lies between successive appliances (105);
- determining (215) a lifecycle rank for each appliance (105) according to a position of the appliance (105) in a path in said graph (400); and
- determining (225) a grade for the appliance (105) on the basis of its lifecycle rank.

2. Method (200) according to claim 1, wherein a first appliance (105) is considered better by a Pareto improvement over a second appliance (105) if each parameter of the first appliance (105) is at least as good as the corresponding parameter of the second appliance (105); and at least one parameter of the first appliance (105) is better than the corresponding parameter of the second appliance (105).

3. Method (200) according to claim 1 or 2, wherein the parameters of an appliance (105) are accommodated such that a low numeral value is considered favourable.

4. Method (200) according to one of the above claims, wherein for each household appliance (105) another rank according to the inverse Pareto criterion is determined; and the appliance (105) is graded on the basis of a combination of both ranks.

5. Method (200) according to one of the above claims, wherein the lifecycle parameters comprise at least an age of the household appliance (105) and a number of processes carried out with the household appliance (105).

6. Method (200) according to one of the above claims, wherein the household appliance (105) comprises a kitchen machine, a laundry care machine or an electric power tool.

7. Method (200) according to one of the above claims, further comprising steps of
- determining usage parameters for a plurality of household appliances (105);
- sorting the appliances (105) into a directed graph (400) with the usage parameters as a sorting criterion;
- such that along a path through the graph (400), a Pareto improvement lies between successive appliances (105); and
- determining a usage rank for each appliance (105) according to a position of the appliance (105) in a path in said graph (400);
- wherein the grade for the appliance (105) is determined on the additional basis of its usage rank.

8. Method (200) according to one of the above claims, wherein the rank of an appliance (105) is determined by selecting a predetermined number; and then iteratively
- ranking every appliance (105) that constitutes a starting point of a path with that number;
- removing ranked appliances (105) from the graph (400); and
- increasing the number;
until all appliances (105) are ranked.

9. Method (200) according to one of the above claims, wherein the grade of an appliance (105) is determined by:
- selecting appliances (105) with the lowest rank; and setting their grade to a predetermined number; and
- iteratively selecting appliances (105) with the next higher rank; determining a distance between a selected appliance (105) to an appliance (105) of the next lower rank; and setting the rank of the selected appliance (105) to the determined distance plus the rank of the appliance (105) of the next lower rank.

10. Method (200) according to claim 9, wherein the distance is determined along the first principal component of a selected appliance (105) to the previous appliance (105).

11. Method (200) according to claim 10, wherein a principal component analysis of the appliance (105) data is carried out.

12. Method (200) according to one of the above claims, further comprising digitally signing an electronic document (145) that comprises the determined grade.

13. Method (200) according to one of the above claims, wherein parameters for household appliances (105) are collected continuously over the usage time of the appliances (105).

14. Device (110) for grading a household appliance (105), the device comprising the following elements:
- an interface (125) for retrieving lifecycle parameters for a plurality of household appliances (105); and
- processing means (120) that are adapted to
- sort the appliances (105) into a directed graph (400) with the lifecycle parameters as a sorting criterion;
- such that along a path through the graph (400), a Pareto improvement lies between successive appliances (105);
- determine a lifecycle rank for each appliance (105) according to a position of the appliance (105) in a path in said graph (400); and
- determine a grade for the appliance (105) on the basis of its lifecycle rank.

15. System (100), comprising a device according to claim 14 and a plurality of household appliances (105).
